# EUROPEAN PATENT APPLICATION

(11) **EP 2 284 402 A2**
(43) Date of publication of application: **16.02.2011**
(21) Application number: 10171807.0
(22) Date of filing: 03.08.2010
(51) Int. Cl.: F04D 29/42

(54) **Blower scroll having an aspirator venturi**

(30) Priority: 10.08.2009 US 538314
(71) Applicant: Behr America, Inc, Troy, Michigan 48083 (US)
(72) Inventor: Lindner, Björn, Toy, MI 48085 (US); Rademacher, Greg, Ortonville, MI 48462 (US); Scherer, Stefan, Ann Arbor, MI 48105 (US)
(74) Representative: Grauel, Andreas

(57) **Abstract**

A blower assembly for use with an HVAC module is provided. The blower assembly includes a scroll or volute shaped housing having an air inlet in a wall of the housing for receiving air to be blown by an impeller, and an air outlet from which the blown air passes from the housing. A blower wheel is secured to a rotatable motor-driven shaft extending along a central axis of the air inlet. At least one venture is provided adjacent to the air inlet of the housing, the at least one venturi connectable to an aspirator that is in fluid communication with a sensor unit. Wherein, during operation, the blower wheel pulls air both through the air inlet to the housing and through the at least one venturi.

## Description

### BACKGROUND OF THE INVENTION

Field of the Invention

The present invention relates to a blower assembly for use with HVAC modules for passenger vehicles.

Description of the Background Art

HVAC modules are used in vehicles to control a passenger compartment air temperature. The module generally includes a housing having an air inlet, an air blower, an evaporator, a heater core, air outlets, etc. The HVAC module can accordingly either heat or cool air flow from the exterior of the vehicle to the interior of the vehicle, optionally to be recirculated within the vehicle. HVAG modules, including the heat exchangers used for the evaporator and heater core, as well as the air blower and housing are thus known to one skilled in the art.

HVAC modules may be provided with an aspirator which is adapted to pull air over a temperature sensor of a control head. An aspirator part is separately provided for this purpose and connected to the HVAC module. See, for instance, U.S. Patent No. 6,347,746 provides an aspirator connected to a temperature/humidity sensor, the aspirator being connected to the HVAC housing downstream of the blower mechanism, whereby air is drawn from the temperature/humidity sensor to the HVAC housing. See, also, U.S. Patent No. 6,116,511, which discloses the presence of an aspirator connected to a temperature sensor, whereby air is drawn from the HVAC housing over the temperature sensor via a venturi.

Aspirators are accordingly generally mounted within a high pressure area, such that air is moved through a tube that passes by another opening which causes suction on the opening. Depending on the location of the aspirator on the HVAC module, air (hot or cold) may be blown into the passenger cabin of the vehicle, which is a disadvantage from the standpoint of controlling the environment of the passenger cabin.

### SUMMARY OF THE INVENTION

It is therefore an object of the present invention to provide a blower assembly for use with an HVAC module.

In an embodiment, a blower assembly is provided that induces a scroll-shaped housing, the scroll-shaped housing having an air inlet in a wall of the housing for receiving air to be blown by the impeller, and an air outlet from which the blown air passes from the housing. A blower wheel is secured to a rotatable motor-driven shaft, the shaft extending along a central axis of the air inlet of the housing. At least one venturi is provided and is adjacent to the air inlet of the housing and is in fluid communication with a sensor unit, whereby, in operation, the blower wheel pulls air both through the air inlet to the housing and through the at least one venturi.

Further, scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus, are not limitive of the present invention, and wherein:

Fig. 1 is a view in perspective of a blower assembly according to an embodiment of the present invention;

Fig. 2 is a top view of the blower assembly;

Fig. 3 is a view in perspective of an embodiment of a blower wheel for use in the present invention;

Fig. 4 is a cross-sectional view of the blower assembly of the present invention depicting a chamber having a circumferential venturi opening;

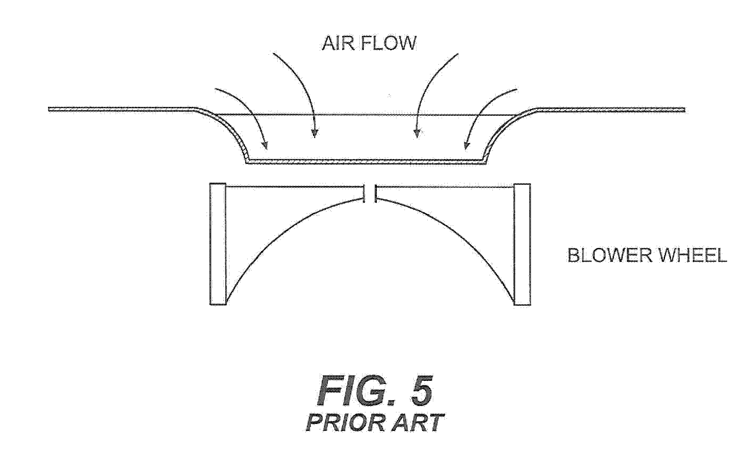

Fig. 5 is a cross-sectional view of a conventional blower assembly as viewed from the side;

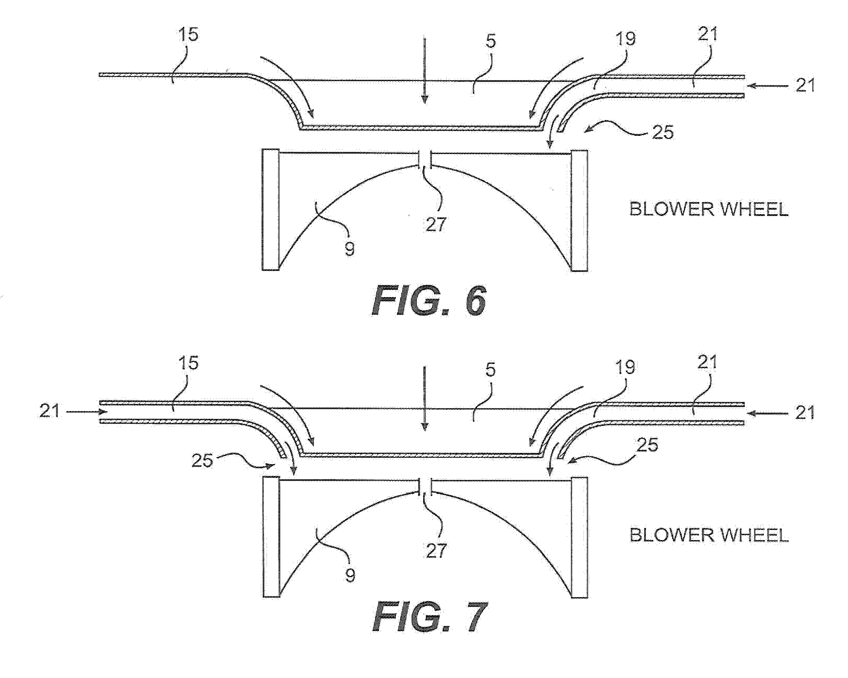

Fig. 6 is a cross-sectional view of the blower assembly of the present invention as viewed from the top depicting a single venturi embodiment;

Fig. 7 is a cross-sectional view of the blower assembly of the present invention depicting a multiple venturi embodiment;

Fig. 8 is a bottom view of the upper housing of the embodiment of Figure 1 depicting a circumferential venturi embodiment;

Fig. 9 is a top view of the upper housing embodiment of Figure 10 depicting a multiple venturi embodiment; and

Fig. 10 is a view in perspective of the blower assembly of the present invention having multiple venturis.

### DETAILED DESCRIPTION

The blower assembly of the present invention will be described further below in conjunction with the Figures.

The blower assembly of the present invention comprises a portion of an HVAC module of a passenger vehicle. The HVAC module conditions outside air blown into the interior of the vehicle for purposes of heating, cooling or ventilation of the vehicle interior. The module accordingly heats or cools and distributes air within the interior of the vehicle. Such modules are also connected to various sensors, such as temperature or humidity sensors. The interior of the HVAG module is in fluid communication with the temperature or humidity sensor housing. The designs of such HVAG modules are well known to those skilled in the art.

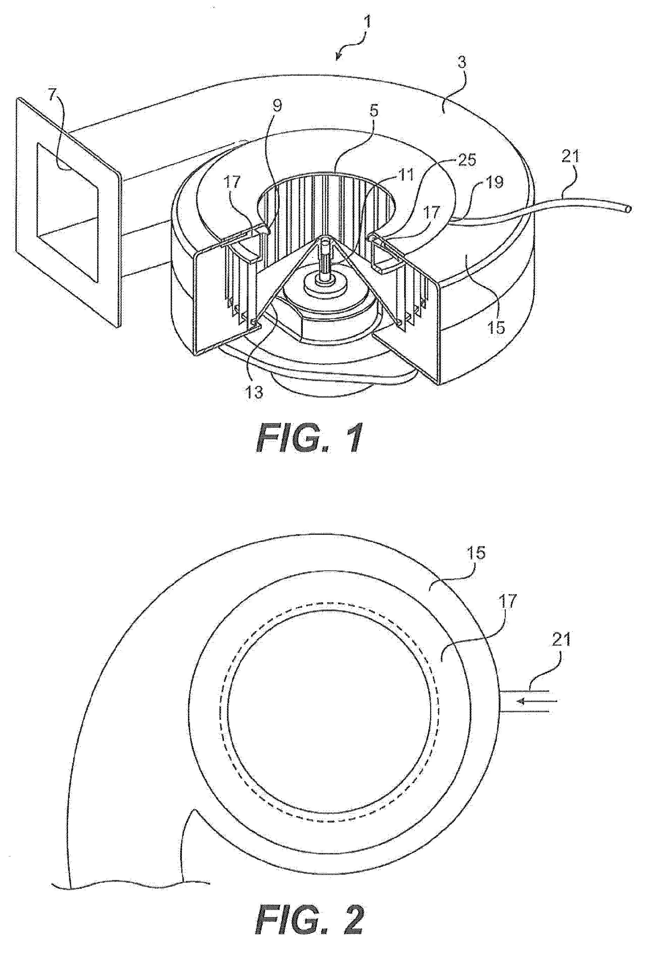

The blower assembly 1 of the present invention which comprises a portion of an HVAC module is shown in Figure 1 as having a volute or scroll-shaped housing 3. The housing 3 has an air inlet 5 and an air outlet 7, whereby multiple air inlets or air outlets can be provided. . The housing may be formed, for example, by securing together mating sides to form the housing.

The blower assembly 1 has a blower wheel 9 secured to a rotating motor-driven shaft 11. The shaft extends along a central axis of inlet 5 in the housing.

The scroll-shaped housing 3 has an axial air inlet 5 in a side wall 15 of the housing, The air islet 5 provides air to be blown by the blower wheel 9. The housing 3 also has an air outlet 7 through which the blown air passes from the housing in a generally tangential manner.

In accordance with an embodiment of the present invention, at least one venturi is provided at a position adjacent to the air inlet 5, with the at least one venturi connected to an aspirator tube in communication with a sensor, such as a temperature sensor.

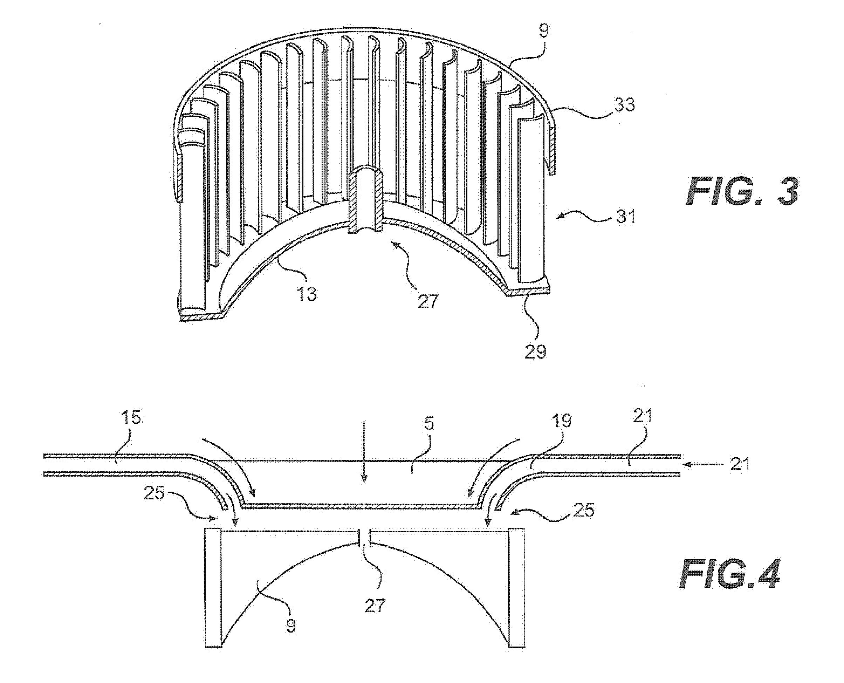

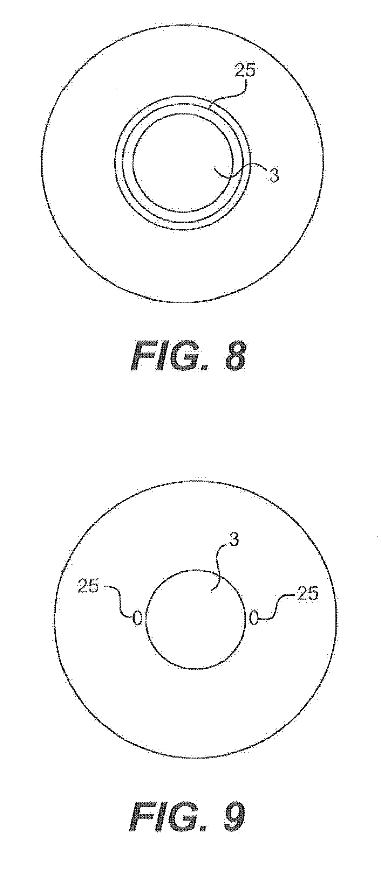

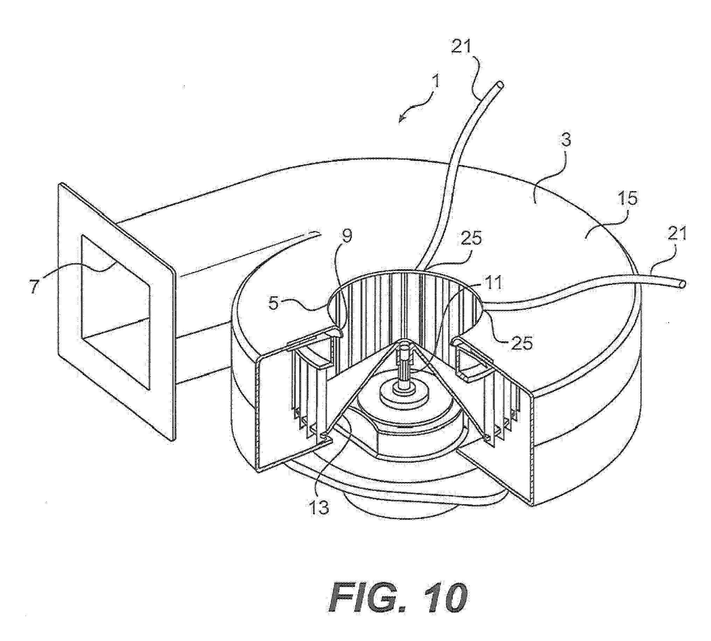

In one embodiment, as depicted in Figure 1, a separate outer air chamber 17 is circumferentially positioned about the air inlet 5. The outer air chamber 17 has art air inlet 19 connected to an aspirator 21, and at least one air outlet in the chamber comprising at least one venturi opening 25 adjacent the air inlet 5. The aspirator 21 is in fluid communication with a sensor, such as a temperature sensor (not shown). Chamber 17 may have multiple venturi openings 25 spaced about the circumference of the air inlet 5 as shown in Figure 9. Alternatively, the venturi opening 25 may comprise an annular opening extending about the circumference of the air inlet 5 as shown in Figures 4 and 8. Multiple aspirators may also be employed connected both to the sensor as well as being spaced about the circumference of the air inlet 5 as shown in Figure 10. The particular design of the venturi opening is not critical to practice of the invention, with the exception that the venturi opening be positioned sufficiently close to the perimeter of the air inlet 5 for the desired venturi effect to be achieved, The venturi opening(s) are of sufficient dimension to provide the desired rate of air flow across the sensor. Also, while air inlet 5 is shown to be circular, it may be of any suitable geometric configuration which permits sufficient air flow into the housing.

The blower wheel 9 may be of any suitable configuration. Preferably, as depicted in Figure 3, the blower wheel comprises a centrifugal blower impeller having a central hub 27 mounted on the rotating motor-driven shaft 11. The impeller has a ventral conical section 13 extending downwardly and outwardly from the central hub and terminating at an outer circumferential edge 29. Impeller blades 31 extend upwardly from the edge 29, terminating at circumferential rim 33. The blades may either be restrictedly confined by the circumferential rim 33 such that the ends of the blades may move within the rim, or the ends of the blades may be fixed to the rim. The blades can be inclined with respect to each other such that air is caused to be drawn into the housing upon rotation of the blades on shaft 11. The blower wheel (and impellers) may be of any suitable configuration which permits air to be drawn into the housing and forced out of the housing as discussed above. One of ordinary skill in the art can readily arrive at a suitable configuration for the blower wheel and impellers.

The shaft 11 is driven by a suitable motor, which motor is generally placed within the housing adjacent the end of the shaft. The motor can be connectable to a speed control unit for controlling the motor and/or a speed of the motor.

In operation, when driven by the associated motor, motor-driven shaft 11 causes the blower wheel to rotate at a pre-selected speed. Upon rotation of the blower wheel, air is caused to be drawn axially into air inlet 5. Air is accordingly also drawn into the venturi opening 25 via the aspirator 21. Air drawn into the housing is then forced radially outwardly between the blower and the interior of the housing, ultimately exiting tangentially through outlet 7 of the housing.

As the air is caused to pass over an evaporator core (not shown) associated with the HVAC module, heat is removed from the air passing over the core. Also, as air is caused to pass over a heater core associated with the HVAC housing, heat is added to the air passing over the core. Various other modes may be employed, such as a control door to control a mix of hot and cold air to result in a desired vehicle interior temperature. In addition, various temperature sensors may be employed at various locations in the HVAC module in connection with various climate control strategies. The blower housing is thus in fluid communication with a source of exterior air as well as with the interior of the vehicle for circulating outside air into the interior, or for recirculating air within the vehicle in a recirculation mode.

The invention being thus described, it will be obvious that the same may be varied in many ways. Such variations are not to be regarded as a departure from the spirit and scope of the invention, and all such modifications as would be obvious to one skilled in the art are to be included within the scope of the following claims.

## Claims

1. A blower assembly for use with an HVAC module, the blower assembly comprising:
a scroll or volute shaped housing, the housing having an air inlet in a wall of the housing configured to receive air to be blown by an impeller, and an air outlet from which the blown air passes from the housing;
a blower wheel secured to a rotatable motor-driven shaft extending along a central axis of the air inlet; and
at least one venturi adjacent to the air inlet of the housing, the at least one venturi connectable to an aspirator that is in fluid communication with a sensor unit,
wherein, during operation, the blower wheel pulls air both through the air inlet to the housing and through the at least one venturi.

2. The blower assembly according to claim 1, further comprising a separate outer air chamber circumferentially positioned about the air inlet, the outer air chamber having an inlet connected to an aspirator.

3. The blower assembly according to claim 2, wherein the venturi comprises a circumferential slit in the outer air chamber adjacent the air inlet.

4. The blower assembly according to claim 2, wherein the outer air chamber includes multiple venturis adjacent to the air inlet.

5. The blower assembly according to claim 1, comprising a single venturi located adjacent to the air inlet.

6. The blower assembly according to claim 1, comprising multiple venturis located adjacent to the air inlet, each being connected to a different aspirator.
